# EUROPEAN PATENT APPLICATION

(11) **EP 2 485 035 A2**
(43) Date of publication of application: **08.08.2012**
(21) Application number: 12386003.3
(22) Date of filing: 03.02.2012
(51) Int. Cl.: G01N 1/22, G01N 1/14, G01N 33/543, G01N 1/40

(54) **Vacuum assisted headspace microextraction sampling devices and methods**

(30) Priority: 03.02.2011 GR 2011100054
(71) Applicant: Technical University of Crete, 73132 Chania-Crete (GR); Psillakis, Elefteria, 73100 Chania-Crete (GR); Kalogerakis,, Nicolas, 73100 Chania-Crete (GR)
(72) Inventor: Psillakis, Elefteria, 73100 Chania-Crete (GR); Kalogerakis, Nicolas, 73100 Chania-Crete (GR)

(57) **Abstract**

The present invention relates to solid phase microextraction (SPME) and solvent microextraction (SME) also known as liquid phase microextraction (LPME) and consists of devices and methods that are used for the headspace microextraction sampling of liquid and solid samples under vacuum conditions.

The basic parts of the devices consist of a sampling chamber (1), a port equipped with a vacuum valve (2) for air evacuating the sampling chamber with the help of a vacuum pump and maintaining the vacuum conditions inside the sampling chamber during microextraction, a port (6) used for liquid sample introduction which may be common with the port (3) used for performing headspace solid phase microextraction or solvent microextraction. The invention is reusable and can accommodate through port (5) auxiliary instrumentation used for monitoring physical parameters inside the sampling chamber (1). The invention can be coupled to any commercially available auto-sampler destined for automated headspace solid phase microextraction or solvent microextraction. Solid/slurry samples are placed in a removable container (12) which can be gastightly secured (14) on the sampling chamber (1) and can be in direct contact with the sampling chamber (1) with the help of a valve (13).

The methods used for microextracting analytes under vacuum from liquid or solid/slurry samples using headspace SPME or SME sampling and the proposed devices are given.

There is no invention or method offering enhanced headspace microextraction under vacuum conditions.

## Description

The present invention relates to solid phase microextraction (SPME) and solvent microextraction (SME) also known as liquid phase microextraction (LPME) sampling and consists of devices and methods used for headspace microextraction sampling of liquid or solid samples under vacuum conditions, thereby enhancing the microextraction of volatile and in particular semi-volatile analytes when compared to existing headspace microextraction sampling conducted under atmospheric pressure.

Headspace SPME and SME sampling is used for the extraction of volatile and semi-volatile analytes from liquid or solid/slurry samples and is performed under atmospheric pressure. Given that the concentration of especially the semi-volatiles target analytes in the gaseous phase at room temperature is small, mass transfer to the headspace was found to accelerate by agitating or heating the sample. However, the presence of particles or macromolecules in the sample matrix as well as the large viscosity of the samples (such as soil, sludge, and biological samples) complicates the extraction process. Increased temperatures were also found to decrease distribution coefficients of the analytes between the solid or liquid extraction phase of SPME and SME respectively and the gaseous headspace phase as well as affect the volume of the acceptor phase in the case of headspace SME. For headspace SPME, an internally cooled SPME device was developed, allowing simultaneous heating of the sample matrix and cooling of the fiber coating. The device is considered to be expensive and problems of septum replacement, frequent sorbent coating failure, sample leakage and coolant supply tubing crimping, have been repeatedly reported, obstructing thus extraction and analysis of the target analytes.

There exists a need for microextraction sampling device that accelerates mass transfer of compounds in the headspace above the sample overcoming the problems associated with agitation and elevated temperatures. The sampling device should be easy to use, provide enhanced sampling of volatile and especially semi-volatile compounds even in complex matrices, allow repetitive use and have the possibility of automation.

The present invention offers headspace microextraction sampling under vacuum conditions which has the inherent advantage of transferring volatile and in particular semi-volatiles analytes, from a liquid or solid/slurry sample to the headspace more rapidly due to the absence of air in the pre-evacuated sampling device. Overall, the method yields enhanced detection sensitivity and recovery even in the absence of sample agitation and at temperatures and microextraction sampling times lower than those applied when performing conventional headspace microextraction under atmospheric pressure. The invention is reusable, easy to use and can be coupled with any commercially available auto-sampler destined for automated solid phase microextraction or automated solvent microextraction.

The improved detection procedure of this invention can be utilised with the SPME device available from Supelco Inc. (Bellefonte, Pa) as well as with gastight micro-syringes which may be equipped with a sample lock system.

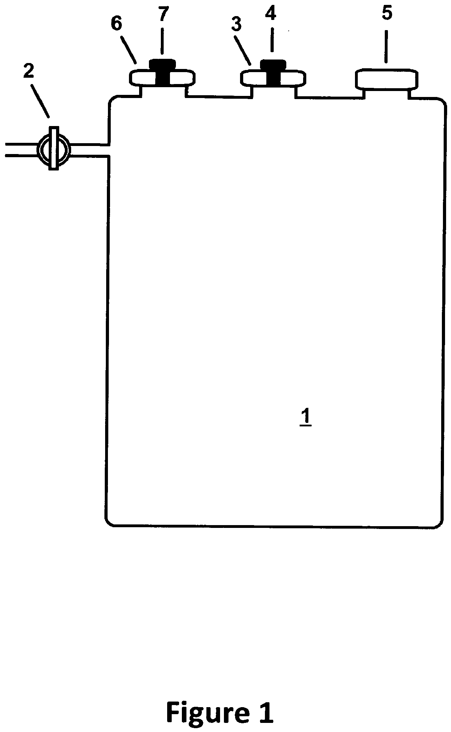

The cross-section of the device destined for liquid samples is shown in Figure 1. It consists of a gastight vessel (1), termed sampling chamber, made from a rigid nonreactive material such as silica glass and has a volume typically ranging from 10 to 1000 ml. In the preferred embodiment, the sampling chamber has a cylindrical shape. According to Figure 1 the device contains a series of gastight ports which are in direct contact with the sampling chamber (1). There is a port equipped with a vacuum valve (2) which may be a stopcock or valve plug used for connecting to a vacuum pump and prepare the sampling chamber for microextraction. The vacuum valve is made from inert materials such as silica glass or PTFE. Upon completion of the SPME or SME sampling the vacuum valve is opened and the atmospheric pressure is restored inside the device. There is also a gastight port (3) which has a septum (4) which may be pierced through with a gastight syringe for liquid sample introduction as well as by the needle of a gastight micro-syringe or the SPME needle/fiber of an SPME device for performing microextraction sampling. Standard septums are often non-resealing, and must be replaced after each use. It is preferable to use a reusable septum, such as Thermogreen LB-2 or a Merlin™ microseal, which are capable of resealing after repeated insertions. Figure 1 also shows the optional ports which are a gastight port (5) that can accommodate auxiliary instrumentation used for monitoring parameters such as temperature and pressure inside the sampling chamber (1) and a gastight port (6) which has a septum (7), preferably of reusable type like the one previously described (4), that offers additional access to the sampling chamber and can be used for operations such as liquid sample introduction or addition of reagents and solutions during operation.

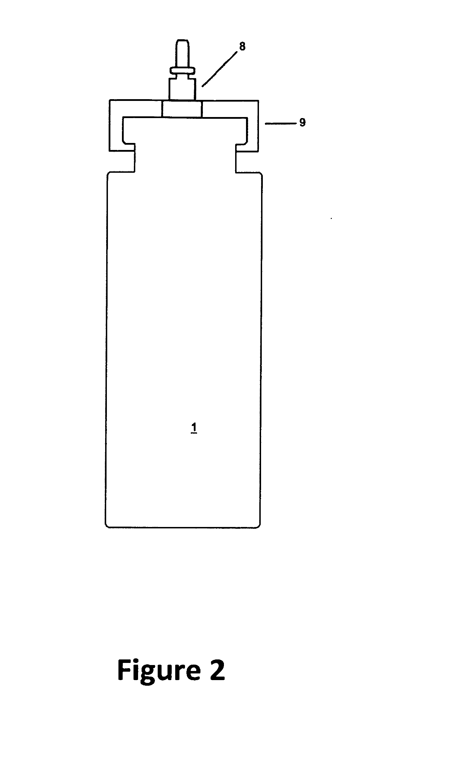

Figure 1 shows the possible position of the multiple ports. It is appreciated however that other arrangements and configurations for the ports as well as other geometries for the sampling chamber (1) are possible. These modifications however, do not interfere with the basic concept of the invention which is to perform headspace microextraction sampling under vacuum. Other arrangements include simple changes such as positioning the vacuum valve (2) on the top part of the device. A possible alternative configuration is to combine different ports into one. An example is given in Figure 2, showing a partial cross-section of this alternative configuration, where a valve such as a combo on/off valve (8) adjusted to a hollow-cap (9) ensuring gastight positioning on the sampling chamber (1), replaces the vacuum valve (2) and the sampling port (3) shown in Figure 1. Such a configuration allows evacuating the sampling chamber, introducing the sample and performing microextraction sampling through the same port without breaking the vacuum. The rest of the ports shown in Figure 1 are considered to be optional and are not included in the specific configuration shown in Figure 2.

Typical operation of the microextraction sampling using the device shown in Figure 1 would involve connecting the vacuum valve (2) to a vacuum pump and remove the air from the sampling chamber (1). The vacuum valve is then closed and the vacuum pump is disconnected. In cases where monitoring of physical parameters inside the sampling chamber (1) is desired, then the auxiliary instrumentation is installed in the optional gastight port (5) prior to the step of air-evacuation. A portion of the liquid sample to be analysed is then poured into the sampling chamber with the help of a gastight syringe though the septum (4) or (7) of the port (3) or (6) respectively. The volume ratio between the sample and headspace should be kept to a minimum ensuring that changes in pressure due to sample introduction will not be significant. The properties of the sample (for example ionic strength or pH) may be adjusted to desired values before introduction into the sampling device provided that the selected values enhance mass transfer into the headspace as seen in microextraction methods. The analytes present in the liquid sample are then left for sufficient time to equilibrate with the headspace. This process may be accelerated with the use of an agitation method such as orbital shaking or magnetic stirring. For the latter, an appropriate magnetic stir bar must be placed inside the sampling chamber (1) before air-evacuation. The release of analyte molecules into the headspace is also facilitated by methods known in the art (for example convective heating, oven/incubator heating, sonication or a combination of the above). Elevated temperatures are not necessary for the proposed method due to the absence of air which facilitates efficient and enhanced analyte transfer into the headspace. Upon sufficient sample equilibration an SPME device or gastight micro-syringe is then introduced into the sampling chamber (1) by piercing septum (4) of port (3) and headspace SPME or headspace SME sampling is performed. Stirring may accelerate the amount of analytes pre-concentrated on a SPME fiber or the acceptor phase used in headspace SME. In the case of SPME sampling, shaking is also a viable mean for enhanced extraction efficiencies. It is widely accepted that controlling the sample and headspace temperature is very important for headspace microextraction even for temperatures close to room temperature. The time for extraction will depend on many factors including the components to extract and the type of microextraction used. Typically the present invention achieves enhanced recoveries for times shorter than the ones applied when performing conventional microextraction under atmospheric pressure. When microextraction sampling is completed, the SPME holder and fiber assembly or the gastight micro-syringe with the enriched acceptor phase is transferred to a suitable analytical instrument for analysis. The pressure inside the sampling chamber (1) is then equilibrated with the atmospheric pressure and after cleaning the device may be used for the next extraction.

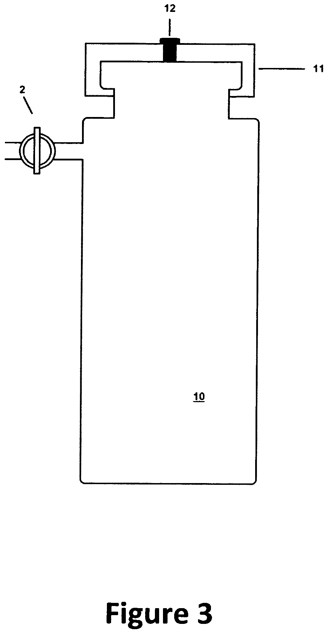

The device destined for analysis of liquids samples in combination with an auto-sampler capable of performing headspace SPME or SME is depicted in Figure 3 where the cross-section configuration shows the possible position of the two ports which are in direct contact with the sampling chamber (1) including the gastight port equipped with a vacuum valve (2) and which may be a stopcock or valve plug used for connecting to a vacuum pump and prepare the sampling chamber for microextraction. The device also includes a hollow cap (10) and septum (11) used for sample introduction and automated SPME or SME sampling and analysis as well as ensures gastight closure of the sampling chamber (1). The device has a volume and shape appropriate to the SPME or SME auto-sampler in use. The sampling chamber (1) is made from a rigid nonreactive material such as silica glass. The hollow cap (10) can be made out of any nonreactive material and can accommodate gastightly the septum (11) (preferably of reusable type, such as Thermogreen LB-2) which may be pierced through with a gastight syringe to introduce the liquid sample into the pre-evacuated device as well as perform automated SME or SPME under vacuum conditions. It is appreciated however that other configurations are possible that do not however interfere with the basic concept of the invention which is to perform headspace microextraction sampling under vacuum. It is also appreciated that this device may be used for microextraction sampling without the use of an auto-sampler, such as the devices shown in Figures 1 and 2.

Typical operation of the microextraction sampling using the gastight sampling device shown in Figure 3 and an auto-sampler, initially involves connecting the vacuum valve (2) to a vacuum pump and remove the air from the sampling chamber (1). Upon air-evacuation, the vacuum valve (2) is closed and the vacuum pump may be disconnected. A portion of the liquid sample to be analysed is then poured into the sampling chamber by piercing the septum (11) with the help of a gastight syringe. The volume ratio between the sample and headspace should be kept to a minimum so as to ensure that changes in pressure due to sample introduction will not be significant. The properties of the sample (for example ionic strength or pH) may be adjusted to desired values before introduction into the device provided that the selected values enhance mass transfer into the headspace as seen in microextraction methods. The analytes present in the liquid sample are then left for sufficient time to equilibrate with the headspace. This process may be accelerated with the use of agitation and/or heating. Depending on the features of the auto-sampler, the sampling device can be placed on the carousel of the auto-sampler before or after this step. Upon sufficient sample equilibration automated headspace SPME or SME can be performed for a preset time depending on the analytes to extract and the type of microextraction used. Typically the present invention achieves enhanced recoveries for sampling times shorter than the ones applied when performing automated microextraction under atmospheric pressure. Agitation and heating of the device and sample may be applied during headspace SPME and SME microextraction sampling depending on the features of the auto-sampler. Upon completion of automated microextraction sampling the device is removed from the auto-sampler, the pressure inside the sampling chamber (1) is equilibrated with the atmospheric pressure through the vacuum valve (2) and after cleaning the device can be used for the next extraction.

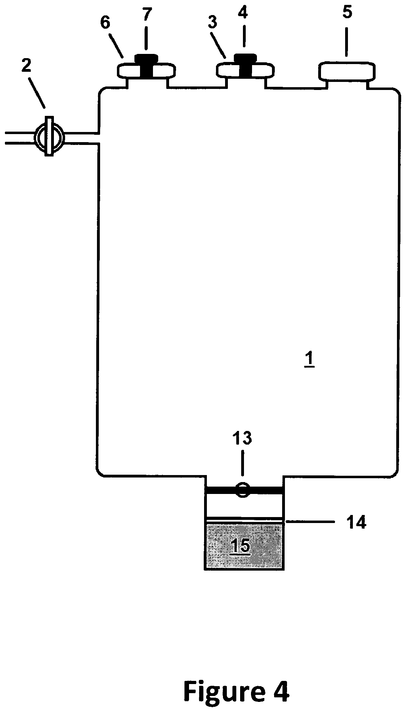

The device destined for solid/slurry samples is shown in Figure 4 and is similar in many respects to the first exemplary embodiment shown in Figure 1. It also consists of a gastight vessel (1), termed sampling chamber, made from a rigid nonreactive material such as silica glass and has a volume typically ranging from 10 to 1000 ml. There is also a port which consists of a vacuum valve (2) which may be a stopcock or valve plug and is used for connecting to a vacuum pump and prepare the sampling chamber (1) for microextraction. Upon completion of the SPME or SME sampling the vacuum valve is opened and the atmospheric pressure is restored inside the device. There is also a gastight port (3) equipped with a septum (4) (such as Thermogreen LB-2 or a Merlin™ microseal) which may be pierced through with a gastight syringe for liquid sample introduction as well as by the needle of a gastight micro-syringe or the SPME needle/fiber of an SPME device and perform microextraction sampling. Figure 4 also shows the optional ports which are a gastight port (5) that can accommodate auxiliary instrumentation used for monitoring parameters such as temperature and pressure inside the sampling chamber (1) and a gastight port (6) equipped with a septum (7) preferably of reusable type that offers additional access to the sampling chamber and can be used for operations such as liquid sample introduction or addition of reagents and solutions during operation. The difference between the two devices shown in Figures 1 and 4 is that the sampling device destined for solid/slurry samples is equipped with a gastight valve (13) and a system (such a luer-lock system) (14) that secures gastightly a removable gastight container (12) used for placing the solid/slurry sample. The gastight valve (13) of this additional port may be a butterfly valve made from inert materials and allows communication or isolation of the solid/slurry sample container with the sampling chamber (1) when in the "open" or "close" position respectively. The dead volume between the solid/slurry sample and the gastight valve (13) should be taken into consideration when choosing the volume of the sampling chamber (1) thus ensuring that the pressure change when opening the gastight valve (13) will not be significant. It is appreciated however that other arrangements and configurations for the ports as well as other geometries for the sampling chamber (1) are possible. These modifications however, do not interfere with the basic concept of the invention which is to perform headspace microextraction sampling under vacuum. It is also appreciated that the device of Figure 4 may be used for liquid samples.

Typical operation of the microextraction sampling using the device shown in Figure 4 would initially involve weighting and placing a certain amount of the solid/slurry sample into the removable gastight container (12). Water or water containing certain amounts of an organic solvent has proven to be a very effective additive to facilitate the release of analytes from the solid matrix and it is often used to accelerate extraction. The sample container (12) with the solid/slurry sample and any additives is then secured on the port through system (14). The gastight valve (13) at this step is in the "close" position, isolating thus the sample from the main microextraction sampling chamber. The vacuum valve of the first port is then connected to the vacuum pump and opened so as to remove air from the sampling chamber (1). Upon evacuation the vacuum valve (2) is closed and the vacuum pump may be disconnected. In cases where monitoring of physical parameters inside the sampling chamber is desired, then the auxiliary instrumentation is installed in the optional gastight port (5) prior to the step of air-evacuation. The gastight valve of (13) is then opened and the analytes present in the solid/slurry sample are left to equilibrate for sufficient time with the headspace inside the sampling chamber (1). This process may be accelerated with the use of a heating method such, convective heating, oven/incubator heating, sonication or a combination of the above. Elevated temperatures are not necessary for the proposed process due to the presence of vacuum. Depending on the liquid content of the sample, stirring or shaking may enhance mass transfer. Upon sufficient sample equilibration an SPME collection device or gastight micro-syringe is then introduced into the sampling chamber (1) by piercing septum (4) of the sampling port (3) and headspace SPME or headspace SME sampling is performed respectively. Heating may accelerate the amount of analytes pre-concentrated on an SPME fiber or the acceptor phase in SME. It is widely accepted that controlling the sample and headspace temperature, even at temperatures just above room temperature, is very important for headspace microextraction. Depending on the liquid content of the sample, stirring or a combination with heating may enhance pre-concentration. In the case of SPME sampling, shaking is also a viable mean for enhanced extraction efficiencies. Typically enhanced recoveries are obtained for times shorter than the ones applied when conducting the microextraction methods under atmospheric pressure. When microextraction sampling is completed, the SPME holder and fiber assembly or the gastight micro-syringe with the enriched acceptor phase is transferred to a suitable analytical instrument for analysis. The pressure inside the sampling chamber (1) and solid/slurry sample container (12) is then equilibrated with the atmospheric pressure through the vacuum valve (2) and after cleaning the device may be used for the next extraction.

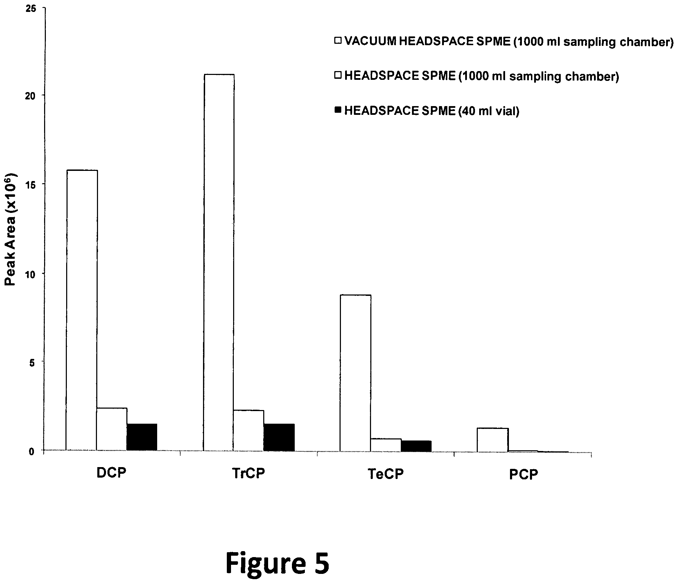

A typical example of the enhanced extraction efficiencies achieved when using the present invention is given in Figure 5 which compares the responses of a gas chromatographer/mass spectrometer after headspace SPME sampling of 9 ml aqueous sample spiked at 100 µg/L with 2,4-dichlorophenol (DCP), 2,4,6-trichlorophenol (TrCP), 2,3,4,6-tetrachlorophenol (TeCP) and pentachlorophenol (PCP), placed in the device of Figure 1 having a volume of 1000 ml under vacuum and under atmospheric pressure. Figure 5 also shows the response of the instrument after placing the same amount of the spiked sample in a 40 ml vial as seen in conventional SPME sampling under atmospheric pressure. The rest of the experimental conditions were common for all three headspace microextraction samplings: 10 min equilibration time; 10 min headspace SPME sampling time; 25 °C; no stirring; pH=2; 30 % NaCl content (w:v); polyacrylate (PA) SPME fiber with a 85 µm thickness.

As can be seen, in the case of the 1000 ml sampling device the vacuum conditions increased 6.6, 9.3, 12 and 13 times the response of the instrument for DCP, TrCP, TeCP and PCP respectively when compared to the headspace SPME sampling performed atmospheric pressure. The presence of a vacuum and the use of a 1000 ml sampling device resulted in a 11, 14, 14 and 15 fold increase of the response of the instrument for DCP, TrCP, TeCP and PCP respectively when compared to the conventional SPME sampling procedure performed in 40 ml vials and under atmospheric pressure. Overall, after sampling the sample for only 10 min at room temperature and without agitation, microextraction is greatly enhanced when working under vacuum and the effect is more pronounced for the less volatile analytes.

## Claims

1. A gastight headspace microextraction sampling device, comprising of: a hollow body said sampling chamber (1); a port equipped with a vacuum valve (2) and means for connecting to a vacuum pump that enables air evacuation of the said sampling chamber (1); a port (3) equipped with a septum (4) capable of being pierced through with the needle of a gastight syringe or a solid phase microextraction device for sample introduction and/or headspace microextraction sampling inside the sampling chamber (1).

2. The device of claim 1 with an additional gastight port (5) which can accommodate auxiliary instrumentation used for monitoring physical parameters inside the sampling chamber (1).

3. The device of claim 1 or 2 with an additional gastight port (6) equipped with a septum (7) capable of being pierced through with the needle of a gastight syringe offering an additional access to the sampling chamber (1).

4. The device of claim 1, 2 or 3 equipped with an additional a port that has the means (14) for securing gastightly a removable container (12) used for placing a solid/slurry sample and is also equipped with a gastight valve (13) that allows connection or isolation of the solid/slurry sample with the sampling chamber (1) when in the "open" or "close" position respectively.

5. A headspace solid phase microextraction method under vacuum conditions for liquid samples using the sampling device of claims 1 to 4. The method consists of the following steps: a) remove the air from the sampling chamber (1) of the device through the vacuum valve (2) with the help of a vacuum pump, b) introduce the liquid sample with the help of a gastight syringe through septum (4) or (7), c) allow time for sufficient equilibration between the liquid sample and the headspace, d) introduce the needle a solid phase microextraction device into the sampling chamber (1) by piercing septum (4), e) expose the fiber of the solid phase microextraction device to the headspace above the liquid sample for a period of time, f) withdraw the fiber into the solid phase microextraction device and transfer it to an appropriate analytical instrumentation for analysis, i) pressure equilibration between the sampling chamber (1) and the atmosphere using the vacuum valve (2) and after cleaning, the device may be used for a new microextraction sampling.

6. A headspace solid phase microextraction method under vacuum conditions for liquid samples using the sampling device of claim 1 and an auto-sampler destined for automated headspace solid phase microextraction. The method consists of the following steps: a) remove the air from the sampling device though the vacuum valve (2) with the help of a vacuum pump, b) introduce the liquid sample with the help of a gastight syringe through septum (4), c) allow time for sufficient equilibration between the liquid sample and the headspace, d) perform automated headspace solid phase microextraction, e) pressure equilibration between the sampling chamber (1) and the atmosphere using the vacuum valve (2) and after cleaning, the device may be used for a new microextraction sampling.

7. A headspace solvent microextraction method under vacuum conditions for liquid samples using the sampling device of claims 1 to 4. The method consists of the following steps: a) remove the air from the sampling chamber (1) of the device through the vacuum valve (2) with the help of a vacuum pump, b) introduce the liquid sample with the help of a gastight syringe through septum (4) or (7), c) allow time for sufficient equilibration between the liquid sample and the headspace, d) introduce the needle of a gastight micro-syringe into the sampling chamber (1) by piercing septum (4), e) activate the plunger of the micro-syringe and expose micro-liters of a non volatile solvent to the headspace above the sample for a period of time, f) withdraw the enriched non volatile solvent into the gastight micro-syringe and transfer it to an appropriate analytical instrumentation for analysis, g) pressure equilibration between the sampling chamber (1) and the atmosphere using the vacuum valve (2) and after cleaning, the device may be used for a new microextraction sampling.

8. A headspace solvent microextraction method under vacuum conditions for liquid samples using the sampling device of claim 1 and an auto-sampler destined for automated headspace solvent microextraction. The method consists of the following steps: a) remove the air from the device though the vacuum valve (2) with the help of a vacuum pump, b) introduce the liquid sample with the help of a gastight syringe through septum (4), c) allow time for sufficient equilibration between the liquid sample and the headspace, d) perform automated headspace solvent microextraction, e) pressure equilibration between the sampling chamber (1) and the atmosphere using the vacuum valve (2) and after cleaning, the device may be used for a new microextraction sampling.

9. A headspace solid phase microextraction method under vacuum conditions for solid/slurry samples using the sampling device of claim 4. The method consists of the following steps: a) place an exact amount of the solid/slurry sample and any additives into the removable container (12), b) secure (14) the container (12) to the port with the valve (13) set on the "close" position, c) remove the air from the sampling chamber (1) of the device through the vacuum valve (2) with the help of a vacuum pump, d) position valve (13) in the "open" position, e) allow time for sufficient equilibration between the sample and headspace, f) introduce the needle a solid phase microextraction device into the sampling chamber (1) by piercing septum (4), g) expose the fiber of the solid phase microextraction device to the headspace above the sample for a period of time, h) withdraw the fiber into the solid phase microextraction device and transfer it to an appropriate analytical instrumentation for analysis, i) pressure equilibration between the device and the atmosphere using the vacuum valve (2) and after cleaning, the device may be used for a new microextraction sampling.

10. A headspace solvent microextraction method under vacuum conditions for solid/slurry samples using the sampling device of claim 4. The method consists of the following steps: a) place an exact amount of the solid sample and any additives into the removable container (12), b) secure (14) the container (12) to the port with the valve (13) set on the "close" position, c) remove the air from the sampling chamber (1) of the device through the vacuum valve (2) with the help of a vacuum pump, d) position valve (13) in the "open" position, e) allow time for sufficient equilibration between the sample and headspace, f) introduce the needle of a gastight micro-syringe into the sampling chamber (1) by piercing septum (4), g) activate the plunger of the micro-syringe and expose micro-liters of a non volatile solvent to the headspace above the sample for a period of time, h) withdraw the enriched non volatile solvent into the gastight micro-syringe and transfer it to an appropriate analytical instrumentation for analysis, i) pressure equilibration between the device and the atmosphere using the vacuum valve (2) and after cleaning, the device may be used for a new microextraction sampling.

11. A headspace microextraction method with any of the claims 5, 7, 9 or 10 and the device of claims 2, 3 or 4, further including installation on port (5) of auxiliary instrumentation used for monitoring physical parameters, prior to step (a) where air-evacuation of the sampling chamber (1) takes place.

12. A headspace microextraction method with any of the claims 5 to 11 where mass transfer of analytes during equilibration and/or microextraction sampling is further accelerated by any form of agitation, controlling the temperature or a combination of the above.
